(19) Europäisches Patentamt
European Patent Office
Office européen des brevets

(11) **EP 2 405 416 B1**

(12) **EUROPEAN PATENT SPECIFICATION**

(45) Date of publication and mention
of the grant of the patent:
**27.11.2013  Bulletin 2013/48**

(21) Application number: **10168866.1**

(22) Date of filing: **08.07.2010**

(51) Int Cl.:
*G08G 1/16* ^(2006.01)          *B60W 30/14* ^(2006.01)
*B60K 31/00* ^(2006.01)        *B60W 30/16* ^(2012.01)
*B60W 30/17* ^(2012.01)        *B60W 30/095* ^(2012.01)
*G01S 13/86* ^(2006.01)        *G01S 13/93* ^(2006.01)
*G01S 17/93* ^(2006.01)

(54) **Adaptive cruise control method and system for controlling speed of vehicle**

Adaptives Geschwindigkeitsregelungsverfahren und System zur Kontrolle der Fahrzeuggeschwindigkeit

Procédé de régulation adaptative de vitesse et système de régulation de la vitesse des véhicules

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(43) Date of publication of application:
**11.01.2012  Bulletin 2012/02**

(73) Proprietor: **Volvo Car Corporation**
**405 31 Göteborg (SE)**

(72) Inventors:
• **Stenborg, Erik**
**41833 Göteborg (SE)**
• **Ekenberg, Andreas**
**42353,Torslanda (SE)**
• **Nordström, Jan**
**41703 Göteborg (SE)**
• **Tunbratt, Willy**
**42339 Torslanda (SE)**

• **Nordin, Oskar**
**41763 Göteborg (SE)**
• **Blom, Åke**
**45993 Ljungskile (SE)**
• **Axelsson, Jan-Olov**
**44141 Alingsås (SE)**
• **Kvist, Niklas**
**44292 Romelanda (SE)**

(74) Representative: **Widahl, Jenny Marie**
**Volvo Car Corporation**
**50094 Intellectual Property**
**VAK-HBBVN**
**40531 Göteborg (SE)**

(56) References cited:
**EP-A1- 1 396 732       EP-A2- 1 577 146**
**US-A- 5 999 874        US-A1- 2002 121 398**
**US-A1- 2009 248 270**

**Description**

Field of the Invention

The present invention relates to a method for adaptive cruise control (ACC), or autonomous cruise control, of a vehicle, wherein the speed of the vehicle in relation to moving or stationary objects is controlled by accelerating and retarding the vehicle within predetermined comfort limits using e.g. the vehicle engine and brakes. The present invention further relates to an adaptive cruise control system for controlling the speed of a vehicle in relation moving or stationary objects. This is achieved by accelerating and retarding the vehicle within predetermined comfort limits while maintaining a comfortable and calm travel experience for the driver and possible passengers.

Background Art

In order to assist the driver of a vehicle, adaptive control system and adaptive cruise control methods are known. Typically, a host vehicle is provided with a radar device which is arranged to provide information regarding distance and speed of a target vehicle in front of the host vehicle. Emitted radar signals are received in order to provide speed information of the target vehicle, wherein a control system controls the speed and distance of the host vehicle in relation to the target vehicle.

The adaptive cruise control system assist the driver by providing an automatic speed regulating functionality which reduces the speed of the host vehicle in relation to slower vehicles in front of the host vehicle in a controlled manner. Hence, the adaptive cruise control function provides assisting functionality to the driver enabling a comfortable and calm travel experience.

However, in first and second generation adaptive cruise control systems, the radar detects stationary and moving objects, wherein the adaptive cruise control function is limited to control the speed of the host vehicle in relation to moving objects. In other words, only moving objects is considered to be target vehicles, which is disadvantageous for situations including stationary objects, such as stationary vehicles or other stationary objects which might form suitable target objects.

US 6,469,656, describes a method for detecting moving and stationary objects in front of the vehicle, wherein distance and speed of a reflecting object is determined in a multi-ramp method using a radar sensor. In particular, objects at greater distances may be determined for speed, distance and relevancy by analyzing third and fourth radar ramps, and radar signal peaks. However, radar signature or spectral analysis methods are uncertain and unreliable. Furthermore, accurate and in detail calibration of the equipment is necessary when being mounted on vehicles of different kinds having e.g. different heights. Additional drawbacks relate to high cost for equipment and complex and time consuming analyzing processes, which in turn may lead to less time for controlling vehicle speed comfortably. Hence, there is a need for improved adaptive cruise control systems and methods.

In US 2009/248270, a vehicle drive assist system that controls acceleration and deceleration when following a preceding vehicle is described, which system comprises an obstacle specifying sub-routine. Furthermore, a subject-vehicle traveling-path is estimated based on e.g. information about the running environment recognized by a stereo-image processing unit.

In EP 1396732, a vehicle surroundings monitoring apparatus for detecting a preceding vehicle existing ahead of an own vehicle is detected by a stereographic camera. Also, estimation of traveling path based on lane markers, side wall data, traced preceding vehicle, and traced own vehicle, is disclosed.

In EP 1577146, a method and system for controlling a vehicle having an ACC system, is described. For example, the method includes determining that the vehicle is in a turn, monitoring for objects and maintaining the vehicle speed if an object is positioned out of the path of the vehicle.

In US 2002/0121398, a auto-cruise apparatus capable to switch between vehicle-to-vehicle distance control and a constant vehicle mode is disclosed.

Summary of the Invention

The object of the present invention is to provide an improved adaptive cruise control method and system wherein more efficient and reliable controlling of vehicle speed in relation to stationary objects is provided. These and other objects are met by the subject matter provided in the independent claims. Preferred embodiments of the invention are presented in the dependent claims.

According to a first aspect thereof, the present invention relates to a method for adaptive cruise control of a vehicle, wherein the speed of the vehicle in relation to moving or stationary objects is controlled by accelerating and retarding the vehicle within predetermined comfort limits. The method comprises detecting stationary or moving objects in the surroundings of the vehicle with an object detection means. The method further comprises determining a control value (CV) of a variable range limit associated with a current trajectory path of the vehicle by using parameters representative of vehicle speed and vehicle yaw movement, identifying a stationary control object by comparing data from the object detecting means with image information from the surroundings of the vehicle, wherein the image information is retrieved with a camera means. Furthermore, the method comprises controlling the speed of the vehicle in relation to the stationary control object when the stationary control object is in a control region for stationary control objects, wherein the control region is defined by the current trajectory path and the control value of the variable range limit, and disregarding stationary objects which are located outside the control region.

The present invention is based on the insight that it is possible to achieve an improved and reliable adaptive cruise control method by controlling speed in relation to identified stationary control objects located in a varying control region. Hence, a fast and secure adaptive cruise control method is provided which assists the driven in traffic situations including stationary objects in order to maintain assisting function to the driver.

Advantageously, the adaptive cruise control method allows for controlling of the speed of the vehicle in relation to a stationary target vehicle which is standing still in a red traffic light situation. Similarly, in traffic situations comprising queues with stationary vehicles, the method allows for comfortable cruise control functionality. For example, controlling of cutout situations in a queue, wherein a moving target vehicle located in front of the host vehicle cut outs and change lane and the next target is a stationary vehicle, is realized.

The identification, or classification, of a control object is carried out by comparing object data and image information representative of objects surrounding the vehicle. In other words, the method allows for that instantaneous image information received by the camera is compared with object data comprising parameters such as position, angle, speed, relative speed, in relation to the host vehicle. Furthermore, the method alters the control region in order to provide full assisting functionality to the driver in different traffic situations comprising stationary vehicles. Due to the varying properties of the control region, the method allows for e.g. reduced processing by disregarding relevant targets which are located outside of the control region. Irrelevant targets may be located to the side of the current trajectory path, or beyond the control value of the varying range limit, and is thereby disregarded.

The alternating control region may be continuously updated in dependence of the current trajectory path and the determined control value of the varying range limit. The current trajectory path may be band shaped and representative of the vehicle width and varied in relation to current turning of the host vehicle. The control value is determined by using parameters representative of vehicle speed and vehicle yaw movement, such as vehicle yaw angle or yaw rate, i.e. the rate of change of the vehicle heading angle. Hence, the current trajectory path and control value are controlled and alternate which, in turn, enables a varying control region. Also, the determination of the control value and the current trajectory path may advantageously be balanced such that road side objects which are considered not relevant for controlling are disregarded, while suitable range for enabling comfortable retarding of the vehicle is provided for relevant stationary controlling objects. For example, non interesting road side objects, such as parked cars, road signs, road safety fences, etc. may immediately be disregarded during turning motion of the vehicle due to the varying control region.

Typically, the absolute value of different parameters, such as yaw rate, etc. are used for determination of the control value.

Furthermore, the adaptive cruise control method enables:

- that the control value, i.e. an instantaneous range limit, is determined and used in combination with the current, or instantaneous, trajectory path of the vehicle, in order to define the control area,
- that no plausibility processing operations are required in order to estimate possible vehicle routes,
- that instantaneous identification and classification of control objects is provided,
- that reliable and improved identification of relevant targets is enabled by comparing object data and image information for object in an alternating control region,
- mounting of adaptive control system in various vehicles without complicated calibration and tuning of the method and system.

According to an exemplifying embodiment, the speed of the vehicle is controlled by acceleration/retardation in an interval between 5 m/s$^2$ and -5 m/s$^2$, or between 4 m/s$^2$ and -4 m/s$^2$, or between 2 m/s$^2$ and -4 m/s$^2$. Advantageously, the speed of the vehicle is controlled by acceleration/retardation of the vehicle within predetermined comfort limits, which allows for comfortable and controlled operation of the vehicle during cruise control operation. Furthermore, the forces the driver and possible passengers will be subjected to during controlled acceleration and retardation of the vehicle may also be limited by corresponding vehicle jerk intervals, i.e. the rate of change of acceleration. For example, the method for adaptive cruise control according to a further embodiment comprises limiting the vehicle jerk value. Hence, a comfortable adaptive cruise control is provided. For example, the vehicle jerk value may be limited to, in m/s$^3$, between 5 and -5, or between 4 and -4, or between 3 and -3, or between 2 and -2. The jerk value is typically only limited during acceleration and deceleration build-up after acquiring new control object, changing control object or losing a control object. Also, the jerk limit value may be configured to vary in relation to, or be dependent on, vehicle speed. For example, for a vehicle speed interval between 70 km/h and 30 km/h, the jerk limit value associated with braking of the vehicle may be varied between -2 and -3 m/s$^3$.

According to an exemplifying embodiment, the step of identifying a stationary control object comprises comparing image information from the camera means, or camera device, with pre-installed images representative of control objects. Advantageously, by utilizing pre-installed images of known object that are considered to be relevant objects which should be regarded as control objects may be efficiently identified and classified. In particular, the method allows for immediate and time efficient determination of control objects. Hence, the adaptive cruise control method is further improved in terms of processing time which, in turn, provides decrease time from identification of object with the object detection device to speed controlling operation executed by an ACC control unit. The pre-installed images may be stored on a non-volatile memory device arranged to be accessed by the control unit. The control unit may further comprise, or operate in combination with, an image processing unit. Hence sample images outlining contours of specific features, or characteristic properties, of control objects may be used for instantaneous identification and classification of objects since the camera typically will be provided with adequate information at the same time as the object detection means detects and object. According to a further embodiment, step of identifying a stationary control object further comprises selecting an object which is closest to the vehicle in the current trajectory path, which allows for further controlling and processing efficiency.

According to an exemplifying embodiment, the control value of said variable range limit is reduced when the speed of said vehicle is decreased. Hence, the control region is advantageously updated to assist the driver by controlling the vehicle speed in relation to stationary control objects which are considered appropriate.

According to an exemplifying embodiment, the control value is reduced when said vehicle yaw rate is increased, which further specifies the control region based on suitable instantaneous vehicle parameters. Advantageously, fast response of the determination of the control region and classification of target objects is realized.

According to an exemplifying embodiment, the step of determining a control value of a variable range limit is based on predetermined variable range limit information. This further allows for further reduction in processing time for determination and implementation of suitable speed controlling instruction by the control unit. This so since the control value for the variable range limit for each possible situation may be known and efficiently retrieved from variable range limit information in the form of e.g. data charts or lists. Typically the control value for the variable range limit is digitally specified in a chart or table as a function of vehicle operation parameters, such as directly measurable parameters, or instantaneous parameters, representative of e.g. vehicle speed and vehicle yaw rate. Directly measurable, or instantaneous, parameters typically may be determined and used for further processing without any pre-determining steps, prediction calculation or plausibility processing. Also, predetermined variable range limit information allows for instantaneous speed control without such pre-determining steps, prediction calculation or plausibility processing. According to a further embodiment, the method comprises retrieving said control value from a memory device comprising the predetermined variable range limit information.

According to an embodiment, the predetermined variable range limit information specifies, or contain information for determining, the control value as a function of vehicle speed and vehicle yaw rate, wherein the function comprises characterizing sections suitable for enabling an efficient and reliable method for adaptive cruise control. In more detail, for increasing yaw rate value and any vehicle speed value above zero, a first, a second and a third section defines the general variations of the control value for the variable range limit. The first section (A) comprises an essentially uniform control value, the second section (B) comprises a decreasing control value, and the third section (C) comprises a control value which is less decreasing in relation to the second section (B).

According to an exemplifying embodiment, the current trajectory path is determined by using one or more parameters representative of vehicle yaw movement, or vehicle yaw rate. Hence, the method is advantageous in the both the current trajectory path and the control value of the variable range limit may be determined instantaneously at every instance by retrieving a signal indicative of vehicle yaw movement. For example, such signal may typically be retrieved from a yaw movement sensor via an internal data bus arrangement of a vehicle. Parameters representative of vehicle yaw rate may also include vehicle steering wheel or drive wheel rotational or angle displacement, and measured by control sensors. Vehicle yaw rate may also be determined by vehicle yaw rate sensors, accelerometer and/or inclination sensor devices.

According to an exemplifying embodiment, the step of controlling the speed of the vehicle in relation to the stationary control object comprises retarding said vehicle into a halt behind said stationary control object. Hence, a stationary control object is identified and used for regulation of the vehicle speed such that the host vehicle stops behind the control object during a controlled and well managed operation, wherein braking power is maintained within comfort limits for driver and possible passengers.

According to an exemplifying embodiment, the method for adaptive cruise control of a vehicle further comprises determining a radius parameter associated with said current trajectory path. Advantageously, the current trajectory path is efficiently determined based on available data comprising radius parameter. The radius parameter is representative of the vehicle's current trajectory path which is an instantaneous value which may be retrieved without pre-processing or calculation. The method may advantageously be configured to utilize the radius parameter for instantaneous determination, or definition of the control region. Hence, direct and efficient controlling is made possible.

According to a second aspect thereof, the present invention relates to a computer program comprising program code, or code means, for performing the method for adaptive cruise control of a vehicle according to the present invention, when the computer program is run on a computer. In an embodiment, the invention also relates to a computer program product comprising program code, or code means, stored on a computer readable medium for performing the method for adaptive cruise control of a vehicle according to the present invention when the computer program is run on a computer.

According to a third aspect thereof, the present invention relates to an adaptive cruise control system for controlling speed of a vehicle in relation to moving or stationary objects by accelerating or retarding said vehicle within predetermined comfort limits. The system comprises a vehicle throttle controller, a vehicle brake system controller, an object detection means arranged to detect moving or stationary objects in the surroundings of the vehicle, and a control unit configured to control the speed of the vehicle in relation to the moving or stationary objects by controlling the throttle controller and the vehicle brake system controller. The adaptive cruise control system further comprises a camera means arranged to retrieve image information from the surroundings of the vehicle and to provide the image information to the control unit, wherein the control unit is configured to identify a stationary control object by comparing data from the object detection means with the image information, and to control the speed of the vehicle in relation to the stationary control object when the stationary control object is determined to be located in a control region. Furthermore, the control region is defined by a current vehicle trajectory path and a control value of a variable range limit, which current vehicle trajectory path and control value are determined by the control unit by using parameters representative of vehicle speed and yaw rate, and stationary objects which are located outside the control region are disregarded by the control unit. With reference to the above described method for adaptive cruise control of a vehicle, the adaptive cruise control system is advantageous in similar manners and allows for an improved adaptive cruise control system wherein efficient controlling of vehicle speed in relation to stationary objects is provided.

According to an exemplifying embodiment, the object detection means, or the detector, is one or more radar devices. Such as a long range radar operable to emit and receive radar signals in e.g. in the millimeter regime. The radar device has a range of at least 350 m, or 250 m, or 150 m. Furthermore, the radar device may have a vertical field of view of +/- 0-10 degrees, or +/- about 5 degrees, and a horizontal field of view of +/- 40 degrees, or +/- 30 degrees, or +/- 20 degrees.

According to an exemplifying embodiment, the adaptive cruise control system further comprises an image processing unit and a memory device with pre-installed images representative of relevant control objects.

According to a further exemplifying embodiment of the invention, it relates to a vehicle comprising an adaptive cruise control system according to the present invention.

In summary, the method and system according to the present invention form part of a comfort system intended to assist the driver of a vehicle by auto-controlling the car according to traffic flow and traffic rhythm, while providing a comfortable and calm travel experience for the driver and possible passengers. Other objectives, features, and advantages of the present invention will appear from the following detailed disclosure, from the attached dependent claims as well as from the drawings.

Brief Description of Drawings

In the following, the present will be described in more detail with reference to the accompanying drawings which show exemplifying embodiments of the present invention, where:

Figure 1 schematically illustrates a vehicle comprising an embodiment of the adaptive cruise control system according to the present invention.
Figure 2a-c schematically illustrate embodiments of various current trajectory paths and exemplifying control values of the varying range limit at three different exemplifying driving situations.
Figure 3 schematically illustrates exemplifying sensing areas for object detection devices according to an embodiment of the present invention.
Figure 4 schematically illustrates an example of a driving situation controlled by an embodiment of the method according to the present invention.
Figure 5 schematically illustrates an example of a further driving situation controlled by an embodiment of the method according to the present invention.
Figure 6 is a schematic top view illustrating detected objects in front of the host vehicle.
Figure 7 and 8 are graphs representative of the control value as a function of vehicle speed and vehicle yaw rate.
Figure 9 schematically illustrates an adaptive cruise control system according to an embodiment of the invention.
Figure 10 and 11 are exemplifying flow-charts representative of method steps according embodiments of the present invention.

The drawings are schematic non-limiting exemplifying representations of embodiments of the invention and the dimension of details may be exaggerated and not true to scale.

Detailed Description of Embodiments of the Invention

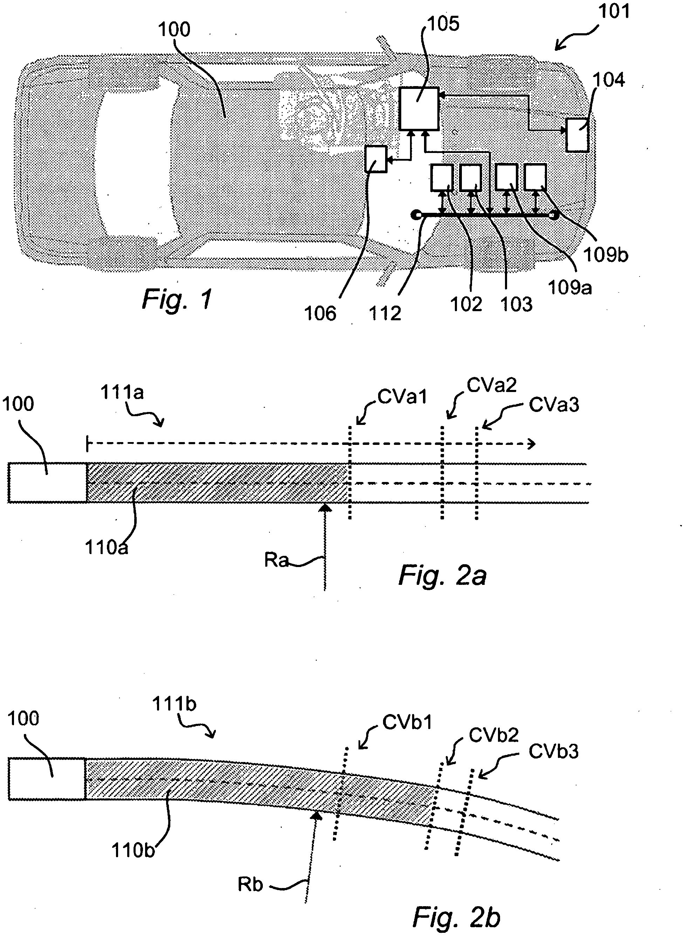

Fig 1 schematically illustrates a host vehicle 100 comprising an embodiment of the adaptive cruise control system 101 according to the present invention. The system 101 comprises a main control unit 105 for controlling the speed of the host vehicle 100 via a throttle controller 102 and a brake system controller 103, which may be controlled via a communication network, or data bus system, 112. An object detection means, or detector, 104 is arranged at the front of the vehicle and configured to detect moving or stationary objects in the surroundings in front of the host vehicle and to provide object data to the control unit 105. The object detection means may be one, or several radar devices arranged to emit and receive radar signals representative of object data, such as object distance, angle, speed/ velocity, and relative speed/velocity. A camera means 106 is further arranged in a forwards direction, e.g. in a top center position of the windshield of the host vehicle 100. The camera means 106 is arranged to retrieve image information from the surroundings in front of said vehicle and to provide the image information to the control unit 105. The system 101 further comprises a vehicle speed sensor 109a and a vehicle yaw rate sensor 109b, each in communication with control unit 105 via communication network 112.

In Fig 2a-c, exemplifying current trajectory paths 111a-c and exemplifying control values CVaN, CVbN, CVcN of the varying range limit, are schematically illustrated. Nine different exemplifying driving situations for a host vehicle 100 relating to three different current trajectory paths (ya, yb, yc), and three different vehicle speeds (v1, v2, v3), are exemplified. As illustrated, the host vehicle 100 has current trajectory paths with a radius as indicated by the radius parameters Ra, Rb, and Rc, respectively. For each one of the given situations in Fig 2a-c, the speed (v1; v2; v3) of the host vehicle 100 is used in combination with the vehicle yaw movement, or rate, (ya, yb, yc) for determining the control value. Accordingly, the control value CV may be described as a function CV(v,y), wherein:

$$CVa1 = CV(v1,ya);\ CVa2 = CV(v2,ya);\ CVa3 = CV(v3,ya),$$

in Fig 2a,

$$CVb1 = CV(v1,yb);\ CVb2 = CV(v2,yb);\ CVb3 = CV(v3,yb),$$

in Fig 2b, and

$$CVc1 = CV(v1,yc);\ CVc2 = CV(v2,yc);\ CVa3 = CV(v3,yc),$$

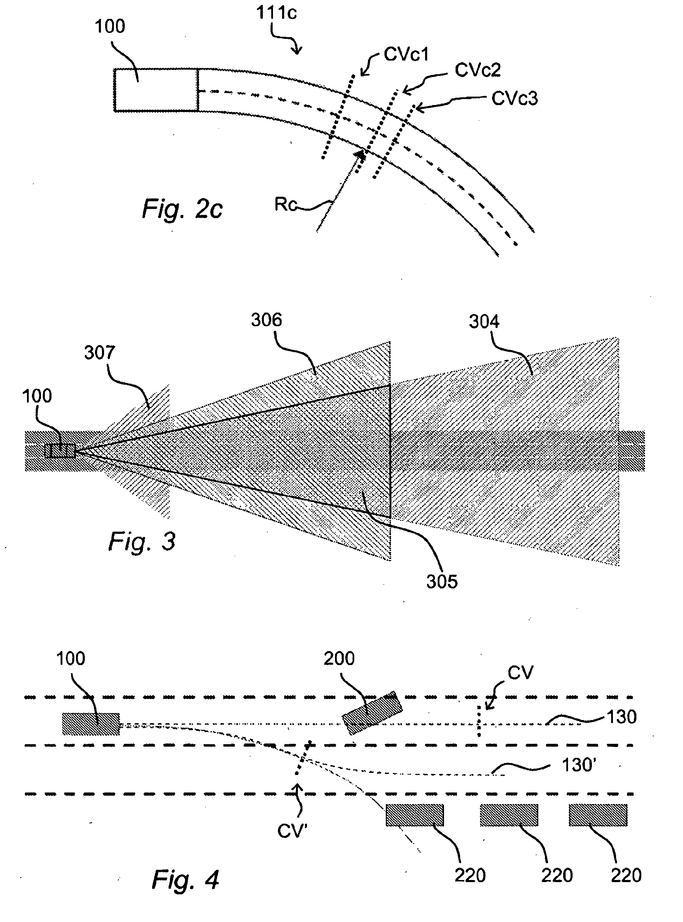

in Fig 2c.

In Fig 2a, a control region 110a, as defined by the current trajectory path 111 a and the control value CVa1, is represented by a shaded portion. Similarly, in Fig 2b, a different control region 110b, as defined by the current trajectory path 111 b and the control value CVa2, is shaded. As illustrated, speed and yaw rate alters the control region, wherein the range of variable rang limit is increased, by determining a higher control value CV, in response to an increase of vehicle speed. Furthermore, the range of the variable range limit is increased as a response to an increase of curvature of the current trajectory path, which is typically defined by vehicle yaw rate.

Hence, Fig 2a-c illustrate how the control region is controlled and defined such that efficient identification of potential control objects is allowed by comparing object data with image information for relevant objects in different, or varying, driving situations. The selection (sel) of an object to be a control object may be described as a function having input parameters representative of the distance to a identified object (Dis), the yaw rate of the host vehicle (H_yaw_rate), and the speed of the host vehicle (H_speed):

$$sel = f(Dis,\ H\_yaw\_rate,\ H\_speed),$$

wherein the selection function defines the alternating control region based on the H_yaw_rate and H_speed parameters.

The varying rang limit may further have a lower limit which is the lowest limit the control value may be assigned. For example, the lowest range limit may be 20 m, or 15 m, or 12 m, or 10 m, or anything there between.

In Fig 3, exemplifying sensing zones for object detection devices and camera means are schematically illustrated. A host vehicle 100 is provided with a long range radar device having a main object detection zone 304, and a camera zone 306, wherein the range limit typically is determined by the resolution of the camera, as well as changing weather and view conditions. Optionally, a short range radar device having a shorter and wider detection zone 307 may be provided. The main object detection zone 304 and the camera zone 306 together form an identification zone 305. An object located in the identification zone is thereby identifiable by comparing retrieved object data and image information. The range of the main object detection zone is determined by the long range radar, and may be about 400 m, or about 300m, or about 200 m, or about 150 m.

A typical cruise control situation is illustrated in Fig 4, wherein a host vehicle 100, equipped with an adaptive cruise control system according to an embodiment of the present invention, is driving in the left lane of a two lane road. At first, the driver is steering the vehicle along an intended path 130, wherein a stationary object 200 is identified as a stationary vehicle which is located in the control region and thus selected as a control object. Hence, the adaptive cruise control system will control the speed of the vehicle in relation to control object 200. However, the driver changes course of the vehicle by turning which alters the current trajectory path and the vehicle yaw rate. The cruise control system immediately respond to the changes by redefining the control region according to the curvature of the new intended path 130', such that the stationary object 200 no longer is in the control region. Due to the course change initiated by the driver, the yaw rate change further provides an adjustment of the control value, from CV to CV'. Hence, the control value for the varying range limit is lowered such that non relevant objects 220, e.g. parked cars, or safety device, becomes located outside the control region and are thereby disregarded by the cruise control system. However, it the driver did not initiate the passing maneuver and change of lane, the cruise control system would assist the driver and control the vehicle into a comfortable stop before reaching the stationary object 200.

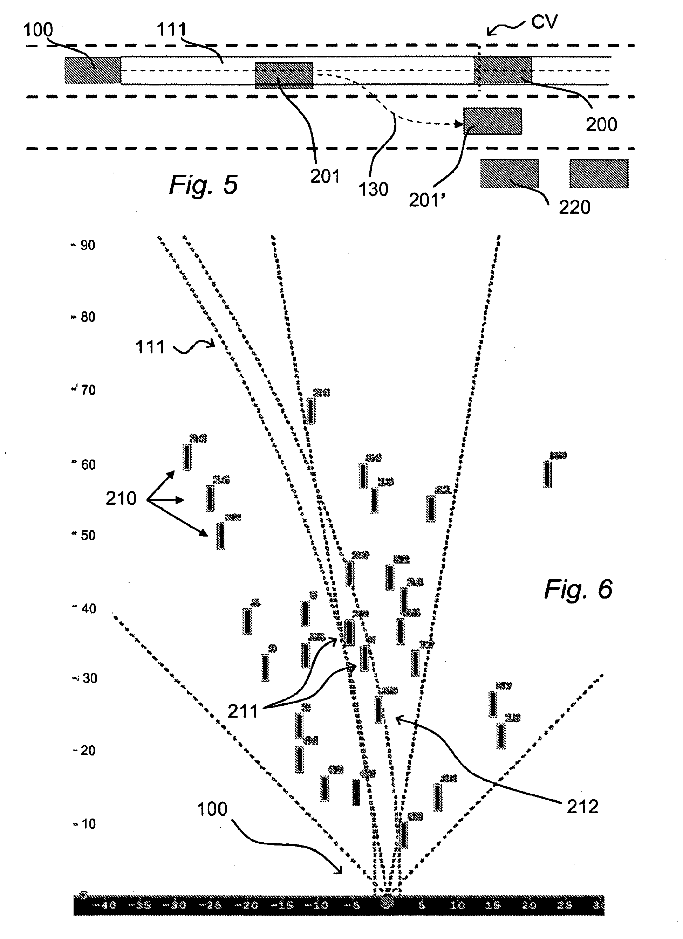

With reference to Fig4, Fig 5 shows a different situation, wherein the adaptive cruise control system of a host vehicle 100 is regulating the vehicle speed in relation to a moving object 201 which is located in the control region and closest to the host vehicle. The moving object 201 performs a cut out movement according to object path 130, and moves to a position located outside of the control region 111. The adaptive cruise control system of the host vehicle will respond by identifying the stationary object 200, which is located in the control region, by comparing object data received via radar with image information received via camera. In this instance, the stationary object 200 may be a car, truck, motorbike, animal, or other relevant stationary objects.

In Fig 6, a plurality of detected, or identified, objects are schematically illustrated in a top view of the area in front of a host vehicle 100. The area is defined in a coordinate system comprising an x-axis, representative of lateral position, and a y-axis, representative of range, in relation to the host vehicle 100 which is located in point (0,0). As illustrated, a plurality of objects are detected which may be considered relevant control objects. In particular, object 212 is identified as control object since is located in the current trajectory path 111, and within the control value of the variable range limit (not indicated). Furthermore, objects 211 are located in the current trajectory path but not currently used for regulating. Additional detects objects, such as objects 210, are disregarded for controlling by the adaptive cruise control system since they are not located in the current trajectory path 111 and thereby located outside the variable control region.

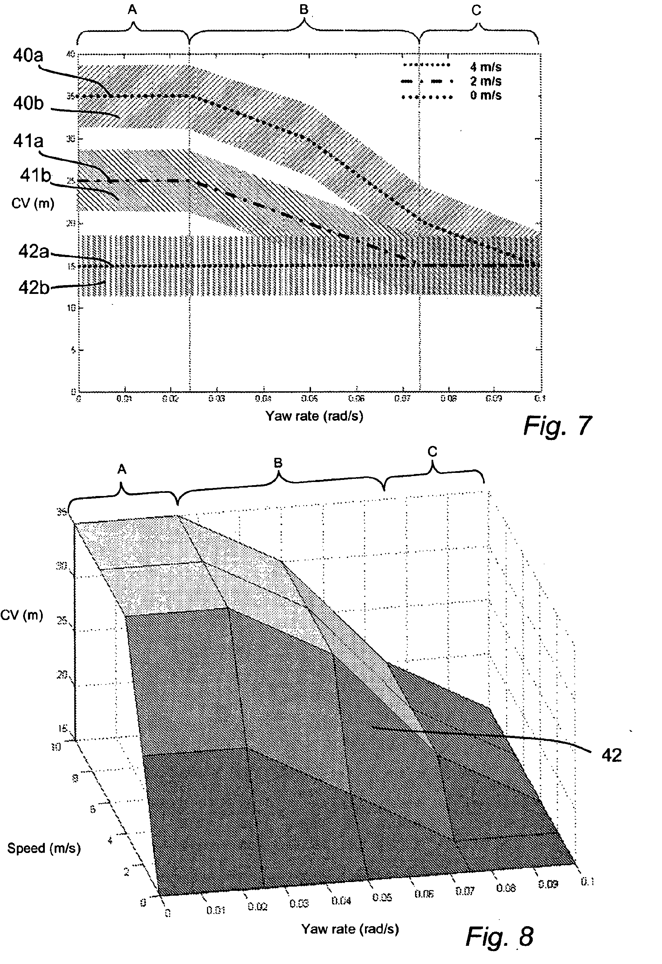

The determination of a suitable control value of the variable range limit is important for continuously, or repetitively, updating the varying control region. For example, the control value is determined based on predetermined variable range limit information comprising data specifying the control value as a function of vehicle parameters representative of vehicle speed and vehicle yaw movement. Numerical values specifying the control value based on these parameters are schematically shown in Fig 7 and 8 containing exemplifying graphs of corresponding numerical values.

In particular, Fig 7 shows three different curves 40a, 41 a and 42a, which represent the control value as a function of yaw rate for three different vehicle speeds: 4 m/s, 2 m/s, and 0 m/s, respectively. The curves 40a, 41 a and 42a correspond to data points on the surface of 42 in Fig 8, for the given vehicle speeds. Hence, curves 40a, 41 a and 42a form exemplifying data points which define specific control values for given vehicle speed and vehicle yaw rate. However, a given number of specified data points may be used for constructing a surface 42 wherein intermediate control value data points are determined by interpolation, i.e. by constructing new data points within the range of the specified data points.

As further illustrated, the graphs in Fig 7 and 8 comprise three different sections A, B and C which are characterizing for the varying range limit information according to an embodiment of the present invention. In the positive yaw rate direction for a given positive vehicle speed, the first section A comprises an essentially uniform control value with low or no negative slope. The second section B has a negative slope and comprises decreasing control values, and the third section C has a less negative slope and comprises a control values which are less decreasing, in relation to previous section B.

The variable range limit information illustrated in the graphs in Fig 7 and 8 provides control values for vehicle speeds up to 10 m/s and has a lower limit of 15 m. However, the variable range limit information is not limited to this example, and may also be defined for vehicle speeds up to 70 km/h, or 110 km/h, wherein the upper limit of the control value is 70 m, or 110 m, or between 50 and 100 m. Furthermore, the characterizing sections of graphs may be shifted in corresponds with higher upper limits of the control value. Furthermore, the data point illustrated in Fig 7 and 8 may be adjusted, or shifted. For example, the curves 40a, 41 a and 42a, maybe shifted upwards or downwards, e.g. within shaded portions 40b, 41 b, and 41 c, in Fig 7.

According to one example relating to the vehicle speed value 4 m/s, the control value in section A may be about 35 m; the control value may decrease from 35 m to about 20 m in section B, and the control value may decrease less but decrease from 20 m to 15 m in section C, wherein the decrease typically is defined in terms of slope, or gradient, of the control value.

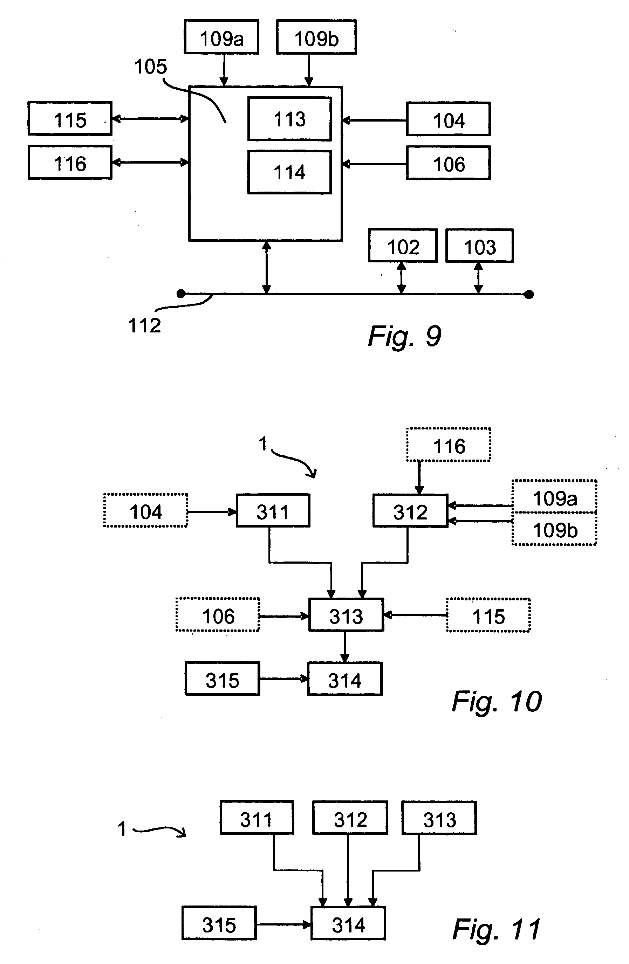

Fig 9 illustrates an embodiment of the adaptive cruise control system described in relation to Fig 1. As illustrated, the control unit 105 is provided with information from object detection device 104, camera means 106, vehicle speed sensor 109a, and vehicle yaw movement sensor 109 b. Furthermore, the adaptive cruise control system comprises a controller subunit in the form of an image processing unit 113, and an image memory device 115 with pre-installed images representative of relevant control objects. In more detail, the image processing unit 113 and the image memory device are further configured to cooperate to identify relevant control objects by comparing image information provided by the camera means with object data provided by the object detection device 104. The adaptive cruise control system further comprises a subunit in the form of CV determination device 114, which is configured to retrieve variable range limit information from a CV memory device 116 storing control value data for varying vehicle parameters.

Flow-charts representative of method steps of embodiment of the method for adaptive cruise control of a vehicle 1, are shown in Fig 10 and 11, in the form of flow chart blocks 311 to 315, wherein:

- Block 311 comprises detecting stationary or moving objects in the surroundings of a vehicle with input from the object detection means 104,
- Block 312 comprises determining a control value of a variable range limit associated with a current trajectory path of the vehicle by using input parameters representative of vehicle speed and vehicle yaw movement provided by vehicle speed sensor 109a and vehicle yaw sensor 109b, variable range limit information is further inputted from the CV memory device 116,
- Block 313 comprises identifying a stationary control object by comparing data from the object detecting means 104 with image information from the surroundings of the vehicle inputted from a camera means 106, pre-installed images are further provided from the image memory device 115,
- Block 314 comprises controlling the speed of the vehicle in relation to the stationary control object when the stationary control object is in the variable control region, and
- Block 315 comprises disregarding stationary objects which are located outside the control region.

The method step may be performed in alternate order as long as required steps for proving information for controlling the speed in block 314 are performed. For example, as illustrated in Fig 11, the results from block 311, 312 , and 313 may be executed, wherein the respective outputs are relayed and used for performing block 314, while block 315 may interrupting the speed controlling in block 314 or preventing it from starting.

The invention has mainly been described above with reference to a few embodiments. However, as is readily appreciated by a person skilled in the art, other embodiments than the ones disclosed above are equally possible within the scope of the invention, as defined by the appended patent claims.

## Claims

1.  Method (1) for adaptive cruise control of a vehicle (100), wherein speed of said vehicle in relation to moving or stationary objects (200; 201) is controlled by accelerating and retarding said vehicle within predetermined comfort limits, said method comprising,

    - detecting stationary or moving objects in the surroundings of said vehicle with an object detection means (104), **characterized by**
    - determining a control value (CV) of a variable range limit associated with a current trajectory path (111) of said vehicle by using parameters representative of vehicle speed and vehicle yaw movement,
    - defining a variable control region (110) for stationary control objects based on said determined control value (CV) of the variable range limit and said current trajectory path (111),
    - identifying a stationary control object (201) by comparing data from said object detecting means with image information from the surroundings of said vehicle, which image information is retrieved with a camera means (106),

- controlling the speed of said vehicle in relation to said stationary control object when said stationary control object is in said variable control region (110), and

- disregarding stationary objects which are located outside said variable control region.

2. Method for adaptive cruise control of a vehicle according to claim 1, wherein the speed of said vehicle is controlled by acceleration/retardation in an interval between 5 m/s$^2$ and -5 m/s$^2$, or between 4 m/s$^2$ and -4 m/s$^2$, or between 2 m/s$^2$ and -4 m/s$^2$.

3. Method for adaptive cruise control of a vehicle according to any one of the preceding claims, wherein said step of identifying a stationary control object comprises comparing image information from said camera means with pre-installed images representative of control objects.

4. Method for adaptive cruise control of a vehicle according to any one of the preceding claims, wherein said control value is reduced when the speed of said vehicle is decreased.

5. Method for adaptive cruise control of a vehicle according to any one of the preceding claims, wherein said control value is reduced when said vehicle yaw rate is increased.

6. Method for adaptive cruise control of a vehicle according to any one of the preceding claims, wherein said step of determining a control value of a variable range limit is based on predetermined variable range limit information.

7. Method for adaptive cruise control of a vehicle according to claim 6, further comprising retrieving said control value from a memory device comprising said predetermined variable range limit information.

8. Method for adaptive cruise control of a vehicle according to any one of claim 6 or 7, wherein said predetermined variable range limit information specifies said control value as a function of vehicle speed and vehicle yaw rate, wherein said function comprises, for increasing absolute yaw rate and for a vehicle speed value above zero, a first section (A) comprising control values with low or no decrease, a second section (B) comprising decreasing control values, and a third section (C) comprising less decreasing control values in relation to the second section.

9. Method for adaptive cruise control of a vehicle according to any one of the preceding claims, wherein said step of controlling the speed of said vehicle in relation to said stationary control object comprises retarding said vehicle into a halt behind said stationary control object.

10. Method for adaptive cruise control of a vehicle according to any one of the preceding claims, further comprising determining a radius parameter (Ra; Rb; Rc;...) associated with said current trajectory path (111).

11. A computer program comprising program code means for performing the method according to any one of claims 1-10, when said program is run on one or more computer units.

12. An adaptive cruise control system (101) for controlling speed of a vehicle (100) in relation to moving or stationary objects (200; 201) by accelerating or retarding said vehicle within predetermined comfort limits, said system (101) comprising

a vehicle throttle controller 102,

a vehicle braking system controller 103,

an object detection means (104) arranged to detect moving or stationary objects in the surroundings of said vehicle (100), and

a control unit (105) configured to control the speed of said vehicle (100) in relation to said moving or stationary objects by controlling said throttle controller and said vehicle braking system controller,

**characterized in that** said system (101) further comprises

a camera means (106) arranged to retrieve image information from the surroundings of said vehicle and to provide said image information to said control unit,

wherein said control unit (105) is configured to identify a stationary control object (201) by comparing data from said object detection means with said image information, and to control the speed of said vehicle in relation to said stationary control object (201) when said stationary control object is determined to be located in a control region (110; 110'),

wherein said control region (110) is defined by a current vehicle trajectory path (111) and a control value (CVa1;

CVa2; CVa3; CVb1; CVb2; CVb3;...) of a variable range limit, which current vehicle trajectory path and control value are determined by said control unit (105) by using parameters representative of vehicle speed and vehicle yaw rate, and

wherein stationary objects which are located outside said control region are disregarded by said control unit.

**13.** An adaptive cruise control system according to claim 12, wherein said object detection means (104) is one or more radar devices.

**14.** An adaptive cruise control system according to any one of claims 12-13, further comprising an image processing unit (113) and an image memory device (115) with pre-installed images representative of relevant control objects.

**15.** A vehicle (100) **characterized in that** said vehicle comprises an adaptive cruise control system (101) according to any one of claims 12-14.

**Patentansprüche**

**1.** Verfahren (1) zur adaptiven Fahrgeschwindigkeitssteuerung eines Fahrzeugs (100), wobei die Geschwindigkeit des Fahrzeugs in Bezug auf sich bewegende oder stationäre Objekte (200; 201) durch Beschleunigen und Abbremsen des Fahrzeugs innerhalb vorgegebener behaglicher Grenzen gesteuert wird, wobei das Verfahren Folgendes umfasst:

- Detektieren stationärer oder sich bewegender Objekte in der Umgebung des Fahrzeugs mit Objektdetektionsmitteln (104),
**gekennzeichnet durch**
- Bestimmen eines Steuerwerts (CV) einer variablen Bereichsgrenze, die mit einem aktuellen Bahnverlaufsweg (111) des Fahrzeugs verbunden ist, **durch** Verwenden von Parametern, die für die Fahrzeuggeschwindigkeit und für die Gierbewegung des Fahrzeugs repräsentativ sind,
- Definieren eines variablen Steuerbereichs (110) für stationäre Steuerobjekte auf der Grundlage des bestimmten Steuerwerts (CV) der variablen Bereichsgrenze und des aktuellen Bahnverlaufswegs (111),
- Identifizieren eines stationären Steuerobjekts (201) **durch** Vergleichen der Daten von den Objektdetektionsmitteln mit den Bildinformationen aus der Umgebung des Fahrzeugs, wobei diese Bildinformationen mit Kameramitteln (106) wiedergewonnen werden,
- Steuern der Geschwindigkeit des Fahrzeugs in Bezug auf das stationäre Steuerobjekt, wenn sich das stationäre Steuerobjekt in dem variablen Steuerbereich (110) befindet, und
- Verwerfen und nicht Berücksichtigen von stationären Objekten, die außerhalb des variablen Steuerbereichs liegen.

**2.** Verfahren zur adaptiven Fahrgeschwindigkeitssteuerung eines Fahrzeugs nach Anspruch 1, wobei die Geschwindigkeit des Fahrzeugs durch Beschleunigung/Abbremsung in einem Intervall zwischen 5 m/s$^2$ und -5 m/s$^2$ oder zwischen 4 m/s$^2$ und -4 m/s$^2$ oder zwischen 2 m/s$^2$ und -4 m/s$^2$ gesteuert wird.

**3.** Verfahren zur adaptiven Fahrgeschwindigkeitssteuerung eines Fahrzeugs nach einem der vorhergehenden Ansprüche, wobei der Schritt des Identifizierens eines stationären Steuerobjekts ein Vergleichen der Bildinformationen aus den Kameramitteln mit vorinstallierten Bildern, die für Steuerobjekte repräsentativ sind, umfasst.

**4.** Verfahren zur adaptiven Fahrgeschwindigkeitssteuerung eines Fahrzeugs nach einem der vorhergehenden Ansprüche, wobei der Steuerwert vermindert wird, wenn die Geschwindigkeit des Fahrzeugs abnimmt.

**5.** Verfahren zur adaptiven Fahrgeschwindigkeitssteuerung eines Fahrzeugs nach einem der vorhergehenden Ansprüche, wobei der Steuerwert vermindert wird, wenn die Giergeschwindigkeit des Fahrzeugs zunimmt.

**6.** Verfahren zur adaptiven Fahrgeschwindigkeitssteuerung eines Fahrzeugs nach einem der vorhergehenden Ansprüche, wobei der Schritt des Bestimmens eines Steuerwerts einer variablen Bereichsgrenze auf der Grundlage vorgegebener Informationen einer variablen Bereichsgrenze basiert.

**7.** Verfahren zur adaptiven Fahrgeschwindigkeitssteuerung eines Fahrzeugs nach Anspruch 6, das ferner das Wiedergewinnen des Steuerwerts aus einer Speichervorrichtung umfasst, die die vorgegebenen Informationen einer variablen Bereichsgrenze umfasst.

8. Verfahren zur adaptiven Fahrgeschwindigkeitssteuerung eines Fahrzeugs nach einem der Ansprüche 6 oder 7, wobei die vorgegebenen Informationen einer variablen Bereichsgrenze den Steuerwert als eine Funktion der Fahrzeuggeschwindigkeit und der Giergeschwindigkeit des Fahrzeugs spezifizieren, wobei die Funktion für eine absolut steigende Giergeschwindigkeit und für eine Fahrzeuggeschwindigkeit größer als Null einen ersten Abschnitt (A), der die Steuerwerte mit niedriger oder keiner Abnahme umfasst, einen zweiten Abschnitt (B), der abnehmende Steuerwerte umfasst, und einen dritten Abschnitt (C), der schwächer abnehmende Steuerwerte in Bezug auf den zweiten Abschnitt umfasst, umfasst.

9. Verfahren zur adaptiven Fahrgeschwindigkeitssteuerung eines Fahrzeugs nach einem der vorhergehenden Ansprüche, wobei der Schritt des Steuerns der Geschwindigkeit des Fahrzeugs in Bezug auf das stationäre Steuerobjekt ein Abbremsen des Fahrzeugs bis zu einem Stillstand hinter dem stationären Steuerobjekt umfasst.

10. Verfahren zur adaptiven Fahrgeschwindigkeitssteuerung eines Fahrzeugs nach einem der vorhergehenden Ansprüche, das ferner ein Bestimmen eines Radiusparameters (Ra; Rb; Rc; ...), der mit einem aktuellen Bahnverlaufsweg (111) verbunden ist, umfasst.

11. Computerprogramm, das Programmcodemittel zur Durchführung des Verfahrens nach einem der Ansprüche 1 bis 10 umfasst, wenn das Programm auf einem oder auf mehreren Computereinheiten ausgeführt wird.

12. Adaptives Fahrgeschwindigkeitssteuerungssystem (101) zum Steuern der Geschwindigkeit eines Fahrzeugs (100) in Bezug auf sich bewegende oder stationäre Objekte (200; 201) durch Beschleunigen und Abbremsen des Fahrzeugs innerhalb vorgegebener behaglicher Grenzen, wobei das System (101) Folgendes umfasst:

   eine Fahrzeugdrosselklappen-Steuereinheit (102),
   eine Fahrzeugbremssystem-Steuereinheit (103),
   Objektdetektionsmittel (104), die angeordnet sind, um sich bewegende oder stationäre Objekte in der Umgebung des Fahrzeugs (100) zu detektieren, und
   eine Steuereinheit (105), die konfiguriert ist, die Geschwindigkeit des Fahrzeugs (100) in Bezug auf sich bewegende oder stationäre Objekte durch Steuern der Drosselklappensteuereinheit und der Fahrzeugbremssystem-Steuereinheit zu steuern,
   **dadurch gekennzeichnet, dass** das System (101) ferner Folgendes umfasst:

   Kameramittel (106), die angeordnet sind, um Bildinformationen aus der Umgebung des Fahrzeugs wiederzugewinnen und um diese Bildinformationen der Steuereinheit bereitzustellen,
   wobei diese Steuereinheit (105) konfiguriert ist, ein stationäres Steuerobjekt (201) durch Vergleichen der Daten von den Objektdetektionsmitteln mit den Bildinformationen zu identifizieren und die Geschwindigkeit des Fahrzeugs in Bezug auf das stationäre Steuerobjekt (201) zu steuern, wenn das stationäre Steuerobjekt bestimmt ist, in einem Steuerbereich (110; 110') angeordnet zu sein,
   wobei der Steuerbereich (110) durch einen aktuellen Bahnverlaufsweg (111) und durch einen Kontrollwert (CVa1; CVa2; CVa3; CVb1; CVb2; CVb3; ...) einer variablen Bereichsgrenze definiert ist, wobei der aktuelle Bahnverlaufsweg und der Kontrollwert durch die Steuereinheit (105) durch Verwenden von Parametern, die für die Fahrzeuggeschwindigkeit und für die Gierbewegung des Fahrzeugs repräsentativ sind, bestimmt werden, und
   wobei stationäre Objekte, die außerhalb des variablen Steuerbereichs liegen, von der Steuereinheit nicht berücksichtigt und verworfen werden.

13. Adaptives Fahrgeschwindigkeitssteuerungssystem nach Anspruch 12, wobei die Objektdetektionsmittel (104) ein oder mehrere Radarvorrichtungen sind.

14. Adaptives Fahrgeschwindigkeitssteuerungssystem nach einem der Ansprüche 12 bis 13, das ferner eine Bildverarbeitungseinheit (113) und eine Bildspeichervorrichtung (115) mit vorinstallierten Bildern, die für Steuerobjekte repräsentativ sind, umfasst.

15. Fahrzeug (100), **dadurch gekennzeichnet, dass** das Fahrzeug ein adaptives Fahrgeschwindigkeitssteuerungssystem (101) nach einem der Ansprüche 12 bis 14 umfasst.

**Revendications**

1. Procédé (1) de régulation adaptative de la vitesse d'un véhicule (100), dans lequel la vitesse dudit véhicule par rapport à des objets mobiles ou stationnaires (200; 201) est contrôlée en accélérant et freinant ledit véhicule à l'intérieur de limites de confort prédéterminées, ledit procédé comportant l'étape qui consiste à

   détecter des objets stationnaires ou mobiles dans l'environnement dudit véhicule à l'aide d'un moyen (104) de détection d'objets,

   **caractérisé par** les étapes qui consistent à

   déterminer une valeur de contrôle (CV) d'une limite variable de plage associée à la trajectoire (111) en cours dudit véhicule en utilisant des paramètres qui représentent la vitesse du véhicule et le mouvement de lacet du véhicule,

   définir une région variable de contrôle (110) des objets stationnaires contrôlés sur la base de ladite valeur de contrôle (CV) déterminée pour la limite variable de plage et ladite trajectoire (111) en cours,

   déterminer (201) si l'objet est stationnaire en comparant les données provenant dudit moyen de détection d'objets à des informations d'image de l'environnement dudit véhicule, lesdites informations d'image étant obtenues à l'aide d'un moyen (106) à caméra,

   contrôler la vitesse dudit véhicule par rapport audit objet stationnaire contrôlé lorsque ledit objet stationnaire contrôlé est situé dans ladite région variable de contrôle (110) et

   éliminer les objets stationnaires situés à l'extérieur de ladite région variable de contrôle.

2. Procédé de régulation adaptative de la vitesse d'un véhicule selon la revendication 1, dans lequel la vitesse dudit véhicule est contrôlée par accélération et/ou freinage dans un intervalle compris entre 5 m/s$^2$ et -5 m/s$^2$, entre 4 m/s$^2$ et -4 m/s$^2$ ou entre 2 m/s$^2$ et -4 m/s$^2$.

3. Procédé de régulation adaptative de la vitesse d'un véhicule selon l'une quelconque des revendications précédentes, dans lequel ladite étape de détermination qu'un objet contrôlé est stationnaire comprend la comparaison des informations d'image provenant dudit moyen à caméra à des images préinstallées représentatives des objets contrôlés.

4. Procédé de régulation adaptative de la vitesse d'un véhicule selon l'une quelconque des revendications précédentes, dans lequel ladite valeur de contrôle est réduite lorsque la vitesse dudit véhicule diminue.

5. Procédé de régulation adaptative de la vitesse d'un véhicule selon l'une quelconque des revendications précédentes, dans lequel ladite valeur de contrôle est réduite lorsque ladite vitesse de lacet du véhicule augmente.

6. Procédé de régulation adaptative de la vitesse d'un véhicule selon l'une quelconque des revendications précédentes, dans lequel ladite étape de détermination d'une valeur de contrôle d'une limite variable de plage est basée sur des informations prédéterminées de limite variable de plage.

7. Procédé de régulation adaptative de la vitesse d'un véhicule selon la revendication 6, comprenant en outre l'étape qui consiste à obtenir ladite valeur de contrôle à l'aide d'un dispositif à mémoire comprenant lesdites informations prédéterminées de limite variable de plage.

8. Procédé de régulation adaptative de la vitesse d'un véhicule selon l'une quelconque des revendications 6 ou 7, dans lequel lesdites informations prédéterminées de limite variable de plage spécifient ladite valeur de contrôle en fonction de la vitesse du véhicule et de la vitesse de lacet du véhicule, ladite fonction comprenant pour augmenter la vitesse absolue de lacet et pour une valeur de vitesse du véhicule supérieure à zéro une première partie (A) qui comprend des valeurs de contrôle présentant une faible décroissance ou pas de décroissance, une deuxième partie (B) qui comprend des valeurs de contrôle décroissantes et une troisième partie (C) qui comprend des valeurs de contrôle moins décroissantes que dans la deuxième partie.

9. Procédé de régulation adaptative de la vitesse d'un véhicule selon l'une quelconque des revendications précédentes, dans lequel ladite étape de contrôle de la vitesse dudit véhicule par rapport audit objet stationnaire contrôlé comprend le freinage dudit véhicule jusqu'à l'arrêt devant ledit objet stationnaire contrôlé.

10. Procédé de régulation adaptative de la vitesse d'un véhicule selon l'une quelconque des revendications précédentes, comportant en outre l'étape qui consiste à déterminer un paramètre de rayon (Ra; Rb; Rc; ...) associé à ladite trajectoire (111) en cours.

11. Programme informatique comprenant un moyen à code de programme et permettant d'appliquer le procédé selon l'une quelconque des revendications 1 à 10 lorsque ledit programme est exécuté sur une ou plusieurs unités d'ordinateur.

**12.** Système (101) de contrôle adaptatif de vitesse contrôlant la vitesse d'un véhicule (100) par rapport à des objets mobiles ou stationnaires (200; 201) en accélérant ou en freinant ledit véhicule à l'intérieur de limites de confort prédéterminées, ledit système (101) comprenant :

un contrôleur (102) d'accélération du véhicule,
un contrôleur (103) du système de freinage du véhicule,
un moyen (104) de détection d'objets agencé pour détecter les objets mobiles ou stationnaires dans l'environnement dudit véhicule (100) et
une unité de contrôle (105) configurée pour contrôler la vitesse dudit véhicule (100) par rapport auxdits objets mobiles ou stationnaires en agissant sur ledit contrôleur d'accélération et sur ledit contrôleur du système de freinage du véhicule,

**caractérisé en ce que** ledit système (101) comporte en outre :

un moyen (106) à caméra agencé pour récupérer des informations d'image de l'environnement dudit véhicule et pour délivrer lesdites informations d'image à ladite unité de contrôle,
ladite unité de contrôle (105) étant configurée pour déterminer si un objet contrôlé (201) est stationnaire en comparant des données provenant dudit moyen de détection d'objets auxdites informations d'image pour contrôler la vitesse dudit véhicule par rapport audit objet contrôlé (201) stationnaire lorsqu'il s'avère que ledit objet stationnaire contrôlé est situé dans une région de contrôle (110; 110'),
ladite région de contrôle (110) étant définie par la trajectoire en cours (111) du véhicule et par une valeur de contrôle (CVa1; CVa2; CVa3; CVb1; CVb2; CVb3; ...) d'une limite variable de plage, la trajectoire en cours du véhicule et la valeur de contrôle étant déterminées par ladite unité de contrôle (105) en utilisant des paramètres qui représentent la vitesse du véhicule et la vitesse de lacet du véhicule,
les objets stationnaires situés à l'extérieur de ladite région de contrôle étant éliminés par ladite unité de contrôle.

**13.** Système de contrôle adaptatif de vitesse selon la revendication 12, dans lequel ledit moyen (104) de détection d'objets est constitué d'un ou plusieurs dispositifs radar.

**14.** Système de contrôle adaptatif de vitesse selon l'une quelconque des revendications 12 et 13, comportant en outre une unité (113) de traitement d'image et un dispositif (115) de mémoire d'image présentant des images préinstallées représentatives d'objets contrôlés pertinents.

**15.** Véhicule (100) **caractérisé en ce que** ledit véhicule comprend un système (101) de contrôle adaptatif de vitesse selon l'une quelconque des revendications 12 à 14.

*Fig. 1*

*Fig. 2a*

*Fig. 2b*

EP 2 405 416 B1

Fig. 2c

Fig. 3

Fig. 4

*Fig. 5*

*Fig. 6*

Fig. 7

Fig. 8

Fig. 9

Fig. 10

Fig. 11

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6469656 B
- US 2009248270 A
- EP 1396732 A
- EP 1577146 A
- US 20020121398 A